# EUROPEAN PATENT SPECIFICATION

(11) **EP 4 143 356 B1**
(45) Date of publication and mention of the grant of the patent: **13.03.2024**
(21) Application number: 21721637.3
(22) Date of filing: 27.04.2021
(51) Int. Cl.: C22C 21/00, B23K 35/02, B23K 35/28, B32B 15/01, C22C 21/02, C22C 21/10, C22F 1/04, F28F 21/08

(54) **ALUMINIUM ALLOY SHEET MATERIAL AND HEAT EXCHANGER INCORPORATING SUCH AN ALUMINIUM ALLOY SHEET MATERIAL**
BLECHMATERIAL AUS ALUMINIUMLEGIERUNG UND WÄRMETAUSCHER MIT EINEM SOLCHEN BLECHMATERIAL AUS ALUMINIUMLEGIERUNG
MATÉRIAU DE FEUILLE D'ALLIAGE D'ALUMINIUM ET ÉCHANGEUR DE CHALEUR COMPRENANT UN TEL MATÉRIAU DE FEUILLE D'ALLIAGE D'ALUMINIUM

(30) Priority: 28.04.2020 EP 20171764
(43) Date of publication of application: 08.03.2023
(73) Proprietor: Novelis Koblenz GmbH, 56070 Koblenz (DE)
(72) Inventor: RITZ, Fabian, 56070 Koblenz (DE); JACOBY, Bernd, 56070 Koblenz (DE); SMEYERS, Axel Alexander Maria, 56070 Koblenz (DE); KIRKHAM, Steven, 56070 Koblenz (DE)
(74) Representative: Weickmann & Weickmann PartmbB
(86) International application number: PCT/IB2021/053457
(87) International publication number: WO 2021/220152

(56) References cited:
- JP-A- 2004 217 983
- JP-A- 2004 218 044
- KR-A- 20180 066 231
- Aleris: "Heat Exchanger Aluminum", Aleris, 1 January 2014 (2014-01-01), pages 1-12, XP055559215, Retrieved from the Internet: URL:www.aleris.com [retrieved on 2019-02-20]
- Gerhard Bermig ET AL: "Copper-free Header & Folded Tube Materials", DVS 8th Brazing Seminar, 1 June 2014 (2014-06-01), pages 1-12, XP055559198, Dusseldorf Retrieved from the Internet: URL:www.hydro.com [retrieved on 2019-02-20]
- Stefan Schluter ET AL: "Material Packages For Brazed Aluminium Solutions In HVAC&R", Hydro Aluminium, 25 March 2010 (2010-03-25), pages 1-38, XP055559668, Retrieved from the Internet: URL:www.hydro.com [retrieved on 2019-02-20]
- European Aluminium Association: "Applications - Power train - Heat exchangers", The Aluminium Automotive Manual, 1 January 2011 (2011-01-01), XP055559190, Retrieved from the Internet: URL:www.eaa.be [retrieved on 2019-02-20]

## Description

### CROSS-REFERENCE TO RELATED APPLICATION

This application claims the benefit of and priority to European Patent Application No. 20171764.2, filed April 28

### FIELD

Described herein is an Al-Mn alloy, also known as a 3XXX-series aluminium alloy, sheet material suitable for use in a heat exchanger. Also described herein is the use of the Al-Mn alloy sheet material in a heat exchanger. Furthermore, the present disclosure relates to a heat exchanger incorporating a component made from the Al-Mn alloy sheet material. In addition, the disclosure relates to a method of manufacturing an Al-Mn alloy sheet material suitable for use in a heat exchanger.

### BACKGROUND

Substrates of aluminium or aluminium alloy in the form of sheet or extrusion, are used to make shaped or formed products. In some of these processes, parts of (shaped) aluminium comprising substrates are interconnected. One end of a substrate may be interconnected with the other end or one substrate may be assembled with one or more other substrates. This is commonly done by brazing. In a brazing process, a brazing filler metal or brazing alloy or a composition producing a brazing alloy upon heating is applied to at least one portion of the substrate to be brazed. After the substrate parts are assembled, they are heated until the brazing filler metal or brazing alloy melts. The melting point of the brazing material is lower than the melting point of the aluminium substrate or aluminium core sheet.

Brazing sheet products find wide applications in heat exchangers and other similar equipment. Conventional brazing products have a core of rolled sheet, typically, but not exclusively an aluminium alloy of the 3xxx-series, having on at least one surface of the core sheet an aluminium brazing clad layer (also known as an aluminium cladding layer). The aluminium brazing clad layer is made of a 4xxx-series alloy comprising silicon as its main alloying constituent in an amount in the range of 4%-20%. The aluminium brazing clad layer may be coupled or bonded to the aluminium core alloy in various ways known in the art, for example by means of roll bonding, cladding spray-forming or semi-continuous or continuous casting processes.

These aluminium brazing clad layers have a liquidus temperature typically in the range of about 540°C to 615°C. Aluminium brazing sheets are disclosed e.g. in patent applications JP 2004217983 A and KR 20180066231 A

### SUMMARY

Covered embodiments of the invention are defined by the claims, not this summary. This summary is a high-level overview of various aspects of the invention and introduces some of the concepts that are further described in the Detailed Description section below. This summary is not intended to identify key or essential features of the claimed subject matter,

The aluminium alloy sheet material is defined by the appended claims.

Optionally, the aluminium alloy sheet material is for use in a heat exchanger of a motor vehicle or an HVAC&R component.

Also described herein is an aluminium alloy sheet material comprising an aluminium alloy core layer made from the aluminium alloy defined above and provided on one or both faces with an aluminium brazing layer. Optionally, the aluminium brazing layer comprises a 4XXX-series aluminium alloy brazing layer. Optionally, the aluminium alloy sheet material is provided in an O-temper or H22-temper.

Also described herein is a brazed heat exchanger, comprising: at least one header, manifold, and/or tube component structured to hold a coolant or refrigerant, said header, manifold, and/or tube component including a plurality of apertures; a plurality of substantially parallel fluid-carrying tubes each extending substantially perpendicular from one of said plurality of apertures in said header plate, manifold, and/or tube component and structured to receive said coolant or refrigerant therethrough; and a plurality of corrugated aluminium alloy fins being in thermal communication with said plurality of fluid-carrying tubes and structured to transfer heat away therefrom, in order to cool said coolant or refrigerant as it circulates therein, and wherein said header, manifold, and/or tube component is being made from the aluminium alloy sheet material as described herein. Optionally, the header, manifold, and/or tube component is made from an aluminium alloy sheet material having 1.50% - 1.8% Mn, 0.10% - 0.45% Si, 0.1%-0.4% Fe, up to 0.07% Cu, 0.01%-0.25% Mg, up to 0.25% Zn (e.g., 0.06% - 0.25 % Zn), up to 0.2% Ti and Cr+Zr 0.08% - 0.25% wherein Cr and Zr are each presentz at a minimum of 0.03%.

Optionally, the header, manifold, and/or tube component has an outside surface and an inside surface in contact with the coolant or refrigerant and wherein on the inside surface the aluminium alloy sheet material is provided with a waterside liner.

Further described herein is a use of an aluminium alloy sheet material according to any preceding or subsequent illustration for manufacturing of a header, manifold, and/or tube component of a brazed heat exchanger.

Other objects and advantages of the invention will be apparent from the following detailed description of non-limiting examples and drawings.

### DESCRIPTION OF THE DRAWING

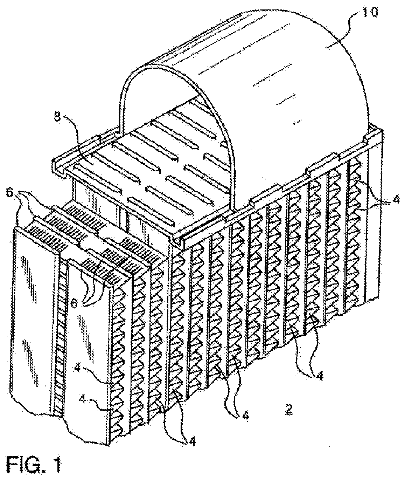

Fig. 1 is an isometric view of a portion of a brazed heat exchanger.

### DETAILED DESCRIPTION

As will be appreciated herein below, except as otherwise indicated, aluminium alloy designations and temper designations refer to the Aluminium Association designations in Aluminium Standards and Data and the Registration Records, as published by the Aluminium Association in 2019, and frequently updated, and are well known to the person skilled in the art. The temper designations are laid down in European standard EN515.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.25% Zr may include an aluminium alloy having no Zr.

As used herein, the meaning of "a," "an," or "the" includes singular and plural references unless the context clearly dictates otherwise.

As used herein, a plate generally has a thickness of greater than about 15 mm. For example, a plate may refer to an aluminum product having a thickness of greater than about 15 mm, greater than about 20 mm, greater than about 25 mm, greater than about 30 mm, greater than about 35 mm, greater than about 40 mm, greater than about 45 mm, greater than about 50 mm, or greater than about 100 mm.

As used herein, a shate (also referred to as a sheet plate) generally has a thickness of from about 4 mm to about 15 mm. For example, a shate may have a thickness of about 4 mm, about 5 mm, about 6 mm, about 7 mm, about 8 mm, about 9 mm, about 10 mm, about 11 mm, about 12 mm, about 13 mm, about 14 mm, or about 15 mm.

As used herein, a sheet generally refers to an aluminum product having a thickness of less than about 4 mm. For example, a sheet may have a thickness of less than about 4 mm, less than about 3 mm, less than about 2 mm, less than about 1 mm, less than about 0.5 mm, less than about 0.3 mm, or less than about 0.1 mm.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g., 1 to 6.1, and ending with a maximum value of 10 or less, e.g., 5.5 to 10.

There is a need for an aluminium alloy sheet material having an increased post-braze strength in combination with a good formability and good corrosion resistance. Provided herein is an aluminium alloy sheet material that achieves this need. Also provided herein is a brazed heat exchanger incorporating such an aluminium alloy sheet material.

Typically, in the alloys of the invention, inevitable impurities are
each up to 0.05% maximum and in total 0.15% maximum.

The aluminium alloy sheet material described herein is ideally suitable for being used in a brazed heat exchanger, preferably of a motor vehicle or as a HVAC&R component, and provides a high post-braze yield strength in combination with a good formability and good corrosion resistance. The aluminium alloy sheet material offers a post-braze yield strength of more than 40 MPa and in the best examples of more than 45 MPa or even more than 50 MPa. The post-braze tensile strength is more than 115 MPa, and typically more than 120 MPa. The aluminium alloy sheet material prevents also detrimental galvanic coupling on the header or manifold tube's surface with, for example, multi-port extrusion (MPE) tubes or folded tubes and assembly features coupled to the manifold (e.g., fluid lines made from, for example, 6XXX-series extruded blocks).

Manganese is the main alloy constituent of this aluminium alloy and contributes to the increase in strength and to provide the corrosion resistance. The Mn content of the aluminium alloy is thus at least 1.4%, preferably at least 1.50%, and more preferably at least 1.55%. A too high Mn content in the final product results in a relatively high amount of Mn in solid solution making the aluminium alloy as core alloy (or inter-liner) more noble and therefore should not exceed 1.8%, and preferably is maximum 1.75%. A too high Mn content increases also the risk of forming large intermetallic phases. The Mn content can be from about 1.4% to 1.8% Mn, (e.g., from 1.45% to 1.8%, from 1.5% to 1.8%, from 1.55% to 1.8%, from 1.6% to 1.8 %, from 1.5% to 1.75%, from 1.5% to 1.7%, or from 1.55% to 1.7%). Optionally, the Mn content can be about 1.4%, about 1.45%, about 1.5%, about 1.55%, about 1.6%, about 1.65%, about 1.7%, about 1.75%, or about 1.8%.

An aluminium alloy with a high amount of Mn can be produced by means of direct chill (DC) casting under control of the casting conditions to avoid the formation of large intermetallic phases. Such intermetallics may tie up considerable amounts of the alloying elements Mn, Cr, Zr, Ti, rending a lower percentage available to contribute to the required engineering properties. In particular, large intermetallics have an adverse effect on formability, and they may hinder further down gauging of the product form, and they can have an adverse effect on the corrosion resistance. The aluminium alloy can favorably be manufactured using casting techniques having a relatively high cooling rate during the casting process, such as with regular continuous casting techniques (e.g., slab casting, twin roll casting, belt casting, drag casting, etc.). High solidification rates during casting are also desirable because they allow for the introduction of higher volume-fractions of fine dispersoids into the alloy. As such, thin ingots are more desirable than thicker ingots for DC-casting of the aluminium alloy. Continuous casting (CC) is further preferred in view of the higher solidification rates attained.

Silicon together with manganese forms precipitation phases of the so-called alpha-phase (Al₁₅Mn₄Si₂) in the course of the production process. This reduces the content of manganese being in solution in the matrix and thus influences the corrosion potential in the desired direction and also increases the mechanical strength through precipitation hardening. Excessively high contents would excessively reduce the melting point of the alloy. The Si content of the aluminium alloy is thus up to 0.7% and preferably up to about 0.45%, and more preferably up to about 0.3%. As Si in solid solution increases the corrosion potential and in order to simultaneously achieve a desired corrosion potential, the Si content of the aluminium alloy is preferably about 0.1%-0.7%. A preferred range for the Si content is about 0.1%-0.45%, and more preferably in the range of about 0.1%-0.3%.

In some examples, the Si content can be up to 0.7% Si (e.g., up to 0.5%, from 0.05% to 0.35%, from 0.06% to 0.35%, from 0.1% to 0.3%, or from 0.15% to 0.25%). Optionally, the Si content can be about 0.01%, about 0.05%, about 0.1%, about 0.15%, about 0.2%, about 0.25%, about 0.3%, about 0.35%, about 0.4%, about 0.45%, about 0.5%, about 0.55%, about 0.6%, about 0.65%, or about 0.7%.

A relatively low Si content is further preferred as it supports the formation of a so-called brown band, which limits corrosion going through the thickness of the aluminium sheet. As the aluminium alloy has a very low Cu content, there is no Cu depletion zone after brazing and the brown band formation provides increased corrosion resistance to the aluminium alloy sheet.

High Fe contents negatively affect the corrosion behavior and also bind silicon in the form of intermetallic phases so that the effect of the bond formation between silicon (Si) and manganese (Mn), as previously described for Si, is limited. The Fe content of the aluminium alloy is thus limited to up to 0.7%, and more preferably up to about 0.5%. In an embodiment the Fe-content is in a range of about 0.1% to 0.4% and provides a good compromise for good corrosion behavior and economic efficiency.

In some examples, the Fe content can be up to 0.7% Fe (e.g., up to 0.5%, from 0.05% to 0.35%, from 0.06% to 0.35%, from 0.1% to 0.4%, from 0.1% to 0.35%, or from 0.15% to 0.3%). Optionally, the Fe content can be about 0.01%, about 0.05%, about 0.1%, about 0.15%, about 0.2%, about 0.25%, about 0.3%, about 0.35%, about 0.4%, about 0.45%, about 0.5%, about 0.55%, about 0.6%, about 0.65%, or about 0.7%.

Copper (Cu) pushes the corrosion potential of the alloy strongly into a positive and thus in an undesirable direction. The Cu content of the aluminium alloy is thus limited to unavoidable traces of up to about 0.10%, and preferably up to about 0.07%, as Cu can also diffuse from the core layer material to the region of brazed connections, in particular fillet welds, and adversely affect the corrosion performance in this region. In an embodiment, to balance the strength benefit of Cu and its effect on the corrosion potential, a preferred Cu-content is in a range of about 0.02%-0.07%, and more preferably 0.03% to 0.07%. Optionally, the Cu content can be about 0.01%, about 0.02%, about 0.03%, about 0.04%, about 0.05%, about 0.06%, about 0.07%, about 0.08%, about 0.09%, or about 0.1%.

Magnesium (Mg) increases the strength by solid solution hardening and pushes the corrosion potential into a base, i.e., into the desired direction. However, higher Mg contents negatively affect the brazing behavior in the normal CAB brazing process (controlled atmosphere brazing). The Mg content of the aluminium alloy is thus limited to up to about 0.30%, preferably to up to about 0.20%. It has, on the other hand, been found that the strength and the corrosion potential of the aluminium alloy sheet can very effectively already be set by a targeted addition of a low quantity of Mg in the range of 0.01%-0.25%, in particular in the range of 0.02%-0.20%, with limited adverse effects on the brazing behavior.

In some examples, the Mg can be up to 0.3% Mg (e.g., up to 0.25 %, up to 0.20%, up to 0.09%, up to 0.04%, from 0.05% to 0.3%, from 0.1% to 0.25%, or from 0.15% to 0.2%). Optionally, the Mg content can be about 0.01%, about 0.05%, about 0.1%, about 0.15%, about 0.2%, about 0.25%, or about 0.3%.

Chromium (Cr) increases the post-braze strength and in the aluminium alloy compensates at least partly the intentional dispensation of copper (Cu). However, since undesired coarse intermetallic casting phases can precipitate with higher Cr contents, the Cr content in the aluminium alloy is limited to up to about 0.25%, and preferably to up to about 0.20%. In some cases, the Cr content can be up to 0.25% Cr (e.g., up to 0.20%, up to 0.09%, up to 0.04%, from 0.05% to 0.25%, from 0.1% to 0.25%, or from 0.15% to 0.2%). Optionally, the Cr content can be about 0.05%, about 0.1%, about 0.15%, about 0.2%, or about 0.25%

By controlling the grain size, zirconium (Zr) increases the post-braze strength of the aluminium alloy. However, since undesired coarse intermetallic phases may form during casting with higher Zr-contents, the Zr-content in the aluminium alloy is limited to up to about 0.25%, and preferably to up to about 0.20%. In some cases, the Zr content can be up to 0.25% Zr (e.g., up to 0.20%, up to 0.09%, up to 0.04%, from 0.05% to 0.25%, from 0.1% to 0.25%, or from 0.15% to 0.2%). Optionally, the Zr content can be about 0.05%, about 0.1%, about 0.15%, about 0.2%, or about 0.25%.

The combined addition of Cr+Zr is in the range of about 0.08% to 0.25%, preferably of 0.08% to 0.20% (e.g., 0.1% to 0.20%, 0.12% to 0.18%, or 0.15% to 0.25%), and wherein Zr and Cr are each present at a minimum of 0.03%. The combined addition provides, amongst others, an increased post-braze strength.

The Zn content of the alloy is limited to up to about 0.50%, and preferably to up to about 0.30%. Since Zn strongly pushes the corrosion potential into a base direction, it can however be added in small quantities as required for fine adjustment of the corrosion potential, in particular in a range of 0.01%-0.25%, and preferably in a range of 0.06%-0.25%.

In some examples, the Zn content can be up to 0.5% Zn (e.g., up to 0.4%, from 0.05% to 0.5%, from 0.06% to 0.45%, from 0.1% to 0.4%, from 0.1% to 0.35%, or from 0.15% to 0.3%). Optionally, the Zn content can be about 0.01%, about 0.05%, about 0.1%, about 0.15%, about 0.2%, about 0.25%, about 0.3%, about 0.35%, about 0.4%, about 0.45%, or about 0.5%.

Ti may be present up to about 0.20%, and preferably up to about 0.10%, to act as a grain refining additive during the casting of the rolling feedstock for manufacturing the aluminium alloy sheet material of the invention. Grain refiners such as those containing titanium and boron, or titanium and carbon, can be used as is well-known in the art.

In some cases, the Ti content can be up to 0.2% Ti (e.g., up to 0.15%, up to 0.1%, from 0.05% to 0.2%, or from 0.05% to 0.15%). Optionally, the Ti content can be about 0.01%, about 0.05%, about 0.1%, about 0.15%, or about 0.2%.

In an embodiment, the aluminium alloy is incorporated in a brazing sheet product comprising a core alloy (or inter-liner) made from the aluminium alloy as described herein and clad on one or both sides with a filler or brazing material layer, preferably of a 4xxx-series aluminium brazing alloy and typically having Si in a range of 5% to 14% as its main alloying constituent. Typical filler alloys within this series are AA4343, AA4045, AA4047, AA4004, AA4104, AA4147, or some near compositional variants thereof. The brazing material layer can be applied to the aluminium alloy core alloy via various techniques known in the art and known to the skilled person. For example, the brazing material layer can be applied by means of roll bonding. Alternatively, the core alloy and brazing material layer can be manufactured simultaneously by means of co-casting techniques.

In another embodiment, provided herein is an outerliner or waterside liner bonded on one side of the core alloy made from the aluminium alloy as described herein and a clad brazing material bonded to the other side of the core alloy. The outerliner would generally be of an alloy tailored to provide high corrosion resistance or even corrosion combined with erosion resistance in the environment to which that face of the sheet is exposed, e.g., the inside of a manifold tube or header being exposed to the coolant or refrigerant of a heat exchanger. An example of a suitable outerliner would be an aluminium alloy having a purposive addition of Zn up to about 4% (e.g., up to about 3% up to about 2.5%, up to about 2%, up to about 1.5%, or up to about 1% Zn), such as, for example, an AA7072-series alloy. Also, an alloy can be used having a purposive addition of Mg to increase the strength of the outerliner such that the outerliner may contribute to the overall post-braze strength of the brazing sheet product. Also a combined addition of Zn and Mg would be a good consideration.

The thickness of the core layer (in percent compared to the total thickness of a brazing sheet product) is preferably in a range of about 60% to 96%, the thickness of the outerliner or waterside liner (in percent compared to the total thickness of the brazing sheet) is preferably in a range of about 5% to 25%, and the thickness of the filler or brazing material layer is preferably (in percent compared to the total thickness of the brazing sheet) in a range of about 4% to 20%, preferably of about 4% to 12%. The thickness of the core alloy at final clad composite thickness can be as little as about 70 microns to as much as about 4 mm, and is preferably in a range of 0.9 to 1.5 mm.

Also provided herein is the use of the aluminium alloy sheet material as described herein for manufacturing, for example, a header or manifold tube as one of the components of a brazed heat exchanger. The aluminium alloy sheet material can be used also as condenser and evaporator manifold tube, including for integrated receiver dryer tube. The aluminium alloy sheet material can also be used for associated products like side supports, tube dividers, tubes in-fill, caps, baffles, flow conditioners, spacers, and bracketry.

In another aspect, provided herein is a brazed heat exchanger, preferably of a motor vehicle or HVAC&R component, comprising at least one component made from the aluminium alloy sheet material as described herein. HVAC&R is a known abbreviation for Heating, Ventilation, Air Conditioning & Refrigeration and relates to heat exchangers in a domestic or industrial environment.

The brazed heat exchanger typically comprises at least one header, manifold, and/or tube component structured to hold a coolant or refrigerant; said header, manifold, and/or tube component including a plurality of apertures; in operation, a plurality of substantially parallel fluid-carrying tubes (which can be made from sheet folded to a sheet or from extruded material, e.g., multi-port extrusions; a typical aluminium alloy is of the 3XXX-series or 6XXX-series) each extending substantially perpendicular from one of said plurality of apertures in said header, manifold, and/or tube component and structured to receive said coolant or refrigerant therethrough; and a plurality of corrugated aluminium alloy fins, the aluminium alloy fins may act as a sacrificial anode, and said aluminium alloy fins being in thermal communication with said plurality of fluid-carrying tubes and structured to transfer heat away therefrom, in order to cool said coolant or refrigerant as it circulates therein; and wherein said header, manifold, and/or tube component being made from the aluminium alloy sheet material as disclosed herein. The fluid-carrying tubes are directly connected to the header, manifold, and/or tube component via a brazed joint such that these components form a direct galvanically coupled corrosion system. A header, manifold, and/or tube component with a lower or more balanced corrosion potential than the fluid-carrying tubes is consequently well suited to anodically protect the fluid-carrying tubes.

In one aspect, provided herein is a method of manufacturing the Al-Mn alloy sheet material as described herein and being suitable for use in a heat exchanger, in particular for a motor vehicle or as a HVAC&R component. The method includes the following steps: casting of rolling feedstock with the composition of claim 1 and with preferred narrower ranges as herein described; for example by means of DC-casting or continuous strip casting, and thereafter preferably homogenized prior to being down gauged by means of rolling to final gauge, for example by hot rolling and optionally also by cold rolling; homogenizing the rolling ingot, in particular for the DC-cast rolling feedstock, is by means of an annealing treatment at a temperature in the range of 530°C to 620°C, preferably in the range of 540°C and 610°C, and a soaking time at the target temperature in the range of 2 and 25 hours, preferably 4 to 16 hours, to eliminate or reduce segregation by diffusion and for form fine grains after recrystallization and enhance formability after recrystallization; hot rolling the rolling ingot, in particular for the DC-cast rolling ingot, to form a hot rolled strip, in particular to a hot rolled strip thickness in the range of 2.0 to 10 mm, preferably in the range of 3 to 8 mm; cold rolling the hot rolled strip or the continuous cast strip to a final thickness with optional intermediate annealing at a temperature in the range of 300°C to 450°C, preferably in the range of 300°C to 400°C, with the final thickness of the cold rolled strip preferably in the range of 0.07 to 5 mm, particularly preferably in the range of 0.8 to 3 mm, more preferably in the range of 0.8 to 2.5 mm.

According to an alternative embodiment, the previously described method can also be carried out without homogenizing the rolling ingot, in particular for the DC-cast ingot, to provide a higher post-braze strength.

It has been determined that this production method in combination with the previously described alloy leads to an aluminium alloy sheet whose core layer has good post-braze strength and simultaneously a low corrosion potential balanced to the fluid-carrying tubes.

If a state hard as-rolled, e.g. H12 or H14 (DIN EN 515), is required in the final state, a recrystallizing annealing of the cold strip is preferably carried out at an intermediate thickness at temperatures of between 300°C and 450°C, preferably between 300°C and 400°C. The intermediate thickness depends on the required final thickness. The mechanical strength of the material can be set via the precise final rolling reduction degree. For a state of H14, e.g., a final rolling reduction degree in the range of 25% to 30%, for example of 30%, is reasonable in order to achieve a favorable combination of strength in the delivered state and formability. The final rolling reduction degree in contrast typically has only little or no influence on the corrosion potential in the brazed state.

For a material in the soft-annealed state "O" (DIN EN 515), soft annealing preferably takes place at final thickness at a temperature of between 300°C and 450°C, more preferably between 300°C and 400°C. The method for a material in the soft-annealed state is also preferably carried out with homogenization of the DC-cast rolling ingot. Alternatively, a state H24 (DIN EN 515) can be set by final annealing at temperatures of between 240°C and 350°C. If high requirements are placed on the formability of the aluminium strip, in particular for the production of a component of the heat exchanger of the aluminium alloy strip, then an O-temper is preferably set during the production process of the aluminium strip. For the use of the aluminium strip for the production of tubes, as a component of the heat exchanger or HVAC&R component, a state H24 or H14 or H12 is preferably set during the production process. Such a state of the aluminium strip in particular facilitates the punching of slots for the connection of the heat exchanger tubes. It has been found that a concluding heat treatment such as final or soft annealing has no significant influence on the corrosion potential after brazing.

In a preferred embodiment the aluminium sheet material is provided in an O-temper or H22 temper.

As shown in Fig. 1, a brazed aluminium heat exchanger 2 as described herein includes a plurality of fluid-carrying tubes 6. The ends of the fluid-carrying tubes 6 are open to a header 10. In this configuration, the header includes also a header plate 8 including a plurality of apertures (one end of the fluid-carrying tubes 6, one header 10 with one header plate 8 are shown in Fig. 1). Coolant is circulated from the header 10, through the fluid-carrying tubes 6 and into another header (not shown). As shown, a plurality of cooling fins 4 are disposed between (in operation) the fluid-carrying tubes 6, in order to transfer heat away therefrom thereby facilitating a heat exchange cooling of the fluid therein. The cooling fins 4 are joined to the fluid-carrying tubes 6 by means of brazing and the fluid-carrying tubes 6 are joined to the header plate 8 by brazing also. Brazing includes all known techniques in the field of heat exchanger manufacture, and includes controlled atmosphere brazing, vacuum atmosphere brazing and flame brazing operations.

## Claims

1. An aluminium alloy sheet material for use in a heat exchanger having a composition, in wt.%, comprising:
| | |
|---|---|
| Mn | 1.4% - 1.8%, |
| Si | up to 0.7%, |
| Fe | up to 0.7%, |
| Mg | up to 0.30%, |
| Cu | up to 0.10%, |
| Cr+Zr | 0.08% to 0.25%, |
wherein Cr and Zr are each present at a minimum of 0.03%,
| | |
|---|---|
| Zn | up to 0.50%, |
| Ti | up to 0.2%, |
balance aluminium and inevitable impurities.

2. The aluminium alloy sheet material according to claim 1, comprising 1.5 - 1.8 wt. % Mn.

3. The aluminium alloy sheet material according to claim 1, comprising 1.55 - 1.8 wt. % Mn.

4. The aluminium alloy sheet material according to any one of claims 1 to 3, comprising up to 0.45 wt. % Si.

5. The aluminium alloy sheet material according to any one of claims 1 to 4, comprising up to 0.5 wt. % Fe.

6. The aluminium alloy sheet material comprising of an aluminium alloy core layer made from the aluminium alloy defined in any one of claims 1 to 5 and provided on one or both faces with an aluminium brazing layer.

7. The aluminium alloy sheet material according to claim 6, wherein the aluminium brazing layer comprises a 4XXX-series aluminium alloy brazing layer.

8. The aluminium alloy sheet material according to any one of claims 1 to 7, wherein the aluminium alloy sheet material is provided in an O-temper or H22-temper.

9. A brazed heat exchanger, comprising:
at least one header, manifold, and/or tube component structured to hold a coolant or refrigerant, said header, manifold, and/or tube component including a plurality of apertures;
a plurality of substantially parallel fluid-carrying tubes each extending substantially perpendicular from one of said plurality of apertures in said header plate, manifold, and/or tube component and structured to receive said coolant or refrigerant therethrough; and
a plurality of corrugated aluminium alloy fins being in thermal communication with said plurality of fluid-carrying tubes and structured to transfer heat away therefrom, in order to cool said coolant or refrigerant as it circulates therein, and wherein said header, manifold, and/or tube component is being made from the aluminium alloy sheet material according to any one of claims 1 to 8.

10. The brazed heat exchanger according to claim 9, wherein the header, manifold, and/or tube component is made from an aluminium alloy sheet material having 1.50%-1.8% Mn; and/or wherein the header, manifold, and/or tube component is made from an aluminium alloy sheet material having 0.10%-0.45% Si; and/or wherein the header, manifold, and/or tube component is made from an aluminium alloy sheet material having 0.1%-0.4% Fe.

11. The brazed heat exchanger according to any one of claims 9 or 10, wherein the header, manifold, and/or tube component is made from an aluminium alloy sheet material having up to 0.07% Cu; and/or wherein the header, manifold, and/or tube component is made from an aluminium alloy sheet material having 0.01%-0.25% Mg.

12. The brazed heat exchanger according to any one of claims 9 to 11, wherein the header, manifold, and/or tube component is made from an aluminium alloy sheet material having up to 0.25% Zn; and in particular, wherein the header, manifold, and/or tube component is made from an aluminium alloy sheet material having 0.06%-0.25% Zn.

13. The brazed heat exchanger according to any one of claims 9 to 12, wherein the header, manifold, and/or tube component has an outside surface and an inside surface in contact with the coolant or refrigerant and wherein on the inside surface the aluminium alloy sheet material is provided with a waterside liner.

14. Use of an aluminium alloy sheet material according to any one of claims 1 to 8 for manufacturing of a header, manifold, and/or tube component of a brazed heat exchanger.

## Patentansprüche

1. Blechmaterial aus einer Aluminiumlegierung zur Verwendung in einem Wärmetauscher mit einer Zusammensetzung, in Gew.-%, umfassend:
| | |
|---|---|
| Mn | 1,4% -1,8%, |
| Si | bis zu 0,7%, |
| Fe | bis zu 0,7%, |
| Mg | bis zu 0,30%, |
| Cu | bis zu 0,10%, |
| Cr + Zr | 0,08% bis 0,25%, |
wobei Cr und Zr jeweils zu mindestens 0,03% vorhanden sind,
| | |
|---|---|
| Zn | bis zu 0,50%, |
| Ti | bis zu 0,2%, |
Aluminium und unvermeidbare Verunreinigungen als Rest.

2. Blechmaterial aus einer Aluminiumlegierung nach Anspruch 1, umfassend 1,5-1,8 Gew.-% Mn.

3. Blechmaterial aus einer Aluminiumlegierung nach Anspruch 1, umfassend 1,55-1,8 Gew.-% Mn.

4. Blechmaterial aus einer Aluminiumlegierung nach einem der Ansprüche 1 bis 3, umfassend bis zu 0,45 Gew.-% Si.

5. Blechmaterial aus einer Aluminiumlegierung nach einem der Ansprüche 1 bis 4, umfassend bis zu 0,5 Gew.-% Fe.

6. Blechmaterial aus einerAluminiumlegierung, umfassend eine Kernschicht aus einer Aluminiumlegierung, die aus der in einem der Ansprüche 1 bis 5 definierten Aluminiumlegierung hergestellt ist und die auf einer oder beiden Seiten mit einer Aluminiumlötschicht versehen ist.

7. Blechmaterial aus einer Aluminiumlegierung nach Anspruch 6, wobei die Aluminiumlötschicht eine Lötschicht aus einer Aluminiumlegierung der Serie 4XXX umfasst.

8. Blechmaterial aus einer Aluminiumlegierung nach einem der Ansprüche 1 bis 7, wobei das Blechmaterial aus einer Aluminiumlegierung in einer O-Temperierung oder H22-Temperierung bereitgestellt ist.

9. Gelöteter Wärmetauscher, umfassend:
mindestens einen Kopfbereich, Verteiler und/oder eine Rohrkomponente, dazu strukturiert, ein Kühlmittel oder Kältemittel aufzunehmen, wobei der Kopfbereich, Verteiler und/oder die Rohrkomponente eine Vielzahl von Öffnungen umfassen/umfasst;
eine Vielzahl von im Wesentlichen parallelen fluidführenden Rohren, die sich jeweils im Wesentlichen senkrecht von einer der Vielzahl von Öffnungen in der Kopfbereich-Platte, dem Verteiler und/oder der Rohrkomponente erstrecken und dazu strukturiert sind, das Kühlmittel oder Kältemittel hierdurch zu erhalten; und
eine Vielzahl von gewellten Aluminiumlegierungsrippen, die in thermischer Verbindung mit der Vielzahl von fluidführenden Rohren stehen und dazu strukturiert sind, Wärme davon wegzuleiten, um das Kühlmittel oder Kältemittel zu kühlen, wenn es darin zirkuliert, und wobei der Kopfbereich, Verteiler und/oder die Rohrkomponente aus dem Blechmaterial aus einer Aluminiumlegierung nach einem der Ansprüche 1 bis 8 hergestellt ist.

10. Gelöteter Wärmetauscher nach Anspruch 9, wobei der Kopfbereich, Verteiler und/oder die Rohrkomponente aus einem Blechmaterial aus einer Aluminiumlegierung mit 1,50%-1,8% Mn hergestellt ist; und/oder wobei der Kopfbereich, Verteiler und/oder die Rohrkomponente aus einem Blechmaterial aus einer Aluminiumlegierung mit 0,10%-0,45% Si hergestellt ist; und/oder wobei der Kopfbereich, Verteiler und/oder die Rohrkomponente aus einem Blechmaterial aus einer Aluminiumlegierung mit 0,1%-0,4% Fe hergestellt ist.

11. Gelöteter Wärmetauscher nach einem der Ansprüche 9 oder 10, wobei der Kopfbereich, Verteiler und/oder die Rohrkomponente aus einem Blechmaterial aus einer Aluminiumlegierung mit bis zu 0,07% Cu hergestellt ist; und/oder wobei der Kopfbereich, Verteiler und/oder die Rohrkomponente aus einem Blechmaterial aus einer Aluminiumlegierung mit 0,01%-0,25% Mg hergestellt ist.

12. Gelöteter Wärmetauscher nach einem der Ansprüche 9 bis 11, wobei der Kopfbereich, Verteiler und/oder die Rohrkomponente aus einem Blechmaterial aus einer Aluminiumlegierung mit bis zu 0,25% Zn hergestellt ist; und insbesondere, wobei der Kopfbereich, Verteiler und/oder die Rohrkomponente aus einem Blechmaterial aus einer Aluminiumlegierung mit 0,06%-0,25 % Zn hergestellt ist.

13. Gelöteter Wärmetauscher nach einem der Ansprüche 9 bis 12, wobei der Kopfbereich, Verteiler und/oder die Rohrkomponente eine äußere Fläche und eine innere Fläche in Kontakt mit dem Kühlmittel oder Kältemittel aufweist und wobei das Blechmaterial aus einer Aluminiumlegierung auf der inneren Fläche mit einer wasserseitigen Auskleidung versehen ist.

14. Verwendung eines Blechmaterials aus einer Aluminiumlegierung nach einem der Ansprüche 1 bis 8 zur Herstellung eines Kopfbereichs, Verteilers und/oder einer Rohrkomponente von einem gelöteten Wärmetauscher.

## Revendications

1. Matériau en feuille d'alliage d'aluminium destiné à être utilisé dans un échangeur de chaleur ayant une composition, en % en poids, comprenant:
| | |
|---|---|
| Mn | 1,4 % à 1,8 %, |
| Si | jusqu'à 0,7 %, |
| Fe | jusqu'à 0,7 %, |
| Mg | jusqu'à 0,30 %, |
| Cu | jusqu'à 0,10 %, |
| Cr+Zr | 0,08 % à 0,25 %, |
dans lequel Cr et Zr sont chacun présents à raison d'un minimum de 0,03 %,
| | |
|---|---|
| Zn | jusqu'à 0,50 %, |
| Ti | jusqu'à 0,2 %, |
le complément aluminium et impuretés inévitables.

2. Matériau en feuille d'alliage d'aluminium selon la revendication 1, comprenant 1,5 à 1,8 % en poids de Mn.

3. Matériau en feuille d'alliage d'aluminium selon la revendication 1, comprenant 1,55 à 1,8 % en poids de Mn.

4. Matériau en feuille d'alliage d'aluminium selon l'une quelconque des revendications 1 à 3, comprenant jusqu'à 0,45 % en poids de Si.

5. Matériau en feuille d'alliage d'aluminium selon l'une quelconque des revendications 1 à 4, comprenant jusqu'à 0,5 % en poids de Fe.

6. Matériau en feuille d'alliage d'aluminium comprenant une couche centrale en alliage d'aluminium fabriquée à partir de l'alliage d'aluminium défini dans l'une quelconque des revendications 1 à 5 et munie sur une ou les deux faces d'une couche de brasage en aluminium.

7. Matériau en feuille d'alliage d'aluminium selon la revendication 6, dans lequel la couche de brasage en aluminium comprend une couche de brasage en alliage d'aluminium de la série 4XXX.

8. Matériau en feuille d'alliage d'aluminium selon l'une quelconque des revendications 1 à 7, dans lequel le matériau en feuille d'alliage d'aluminium est fourni dans un état O ou H22.

9. Échangeur de chaleur brasé, comprenant:
au moins un composant collecteur, distributeur et/ou tube structuré pour contenir un liquide de refroidissement ou un réfrigérant, ledit composant collecteur, distributeur et/ou tube incluant une pluralité d'ouvertures;
une pluralité de tubes transportant un fluide sensiblement parallèles s'étendant chacun sensiblement perpendiculairement depuis l'une de ladite pluralité d'ouvertures dans ledit composant plaque de collecteur, distributeur et/ou tube et structurés pour recevoir ledit liquide de refroidissement ou réfrigérant à travers ceux-ci; et
une pluralité d'ailettes en alliage d'aluminium ondulées étant en communication thermique avec ladite pluralité de tubes transportant un fluide et structurées pour transférer la chaleur à partir de ceux-ci, afin de refroidir ledit liquide de refroidissement ou réfrigérant lorsqu'il circule à l'intérieur, et dans lequel ledit composant collecteur, distributeur et/ou tube est fabriqué à partir du matériau en feuille d'alliage d'aluminium selon l'une quelconque des revendications 1 à 8.

10. Échangeur de chaleur brasé selon la revendication 9, dans lequel le composant collecteur, distributeur et/ou tube est fabriqué à partir d'un matériau en feuille d'alliage d'aluminium ayant 1,50 % à 1,8 % de Mn; et/ou dans lequel le composant collecteur, distributeur et/ou tube est fabriqué à partir d'un matériau en feuille d'alliage d'aluminium ayant 0,10 % à 0,45 % de Si; et/ou dans lequel le composant collecteur, distributeur et/ou tube est fabriqué à partir d'un matériau en feuille d'alliage d'aluminium ayant 0,1 % à 0,4 % de Fe.

11. Échangeur de chaleur brasé selon l'une quelconque des revendications 9 ou 10, dans lequel le composant collecteur, distributeur et/ou tube est fabriqué à partir d'un matériau en feuille d'alliage d'aluminium ayant jusqu'à 0,07 % de Cu; et/ou dans lequel le composant collecteur, distributeur et/ou tube est fabriqué à partir d'un matériau en feuille d'alliage d'aluminium ayant 0,01 % à 0,25 % de Mg.

12. Échangeur de chaleur brasé selon l'une quelconque des revendications 9 à 11, dans lequel le composant collecteur, distributeur et/ou tube est fabriqué à partir d'un matériau en feuille d'alliage d'aluminium ayant jusqu'à 0,25 % de Zn; et en particulier, le composant collecteur, distributeur et/ou tube est fabriqué à partir d'un matériau en feuille d'alliage d'aluminium ayant 0,06 % à 0,25 % de Zn.

13. Échangeur de chaleur brasé selon l'une quelconque des revendications 9 à 12, dans lequel le composant collecteur, distributeur et/ou tube a une surface extérieure et une surface intérieure en contact avec le liquide de refroidissement ou réfrigérant et dans lequel sur la surface intérieure le matériau en feuille d'alliage d'aluminium est muni d'une doublure côté eau.

14. Utilisation d'un matériau en feuille d'alliage d'aluminium selon l'une quelconque des revendications 1 à 8 pour la fabrication d'un composant collecteur, distributeur et/ou tube d'un échangeur de chaleur brasé.
